# EUROPÄISCHE PATENTANMELDUNG

(11) **EP 3 244 516 A1**
(43) Veröffentlichungstag der Anmeldung: **15.11.2017**
(21) Anmeldenummer: 16169619.0
(22) Anmeldetag: 13.05.2016
(51) Int. Cl.: H02K 15/16, H02K 11/35, H02K 7/04

(54) **ROTOR FÜR EINE ROTIERENDE MASCHINE**

(71) Anmelder: Siemens Aktiengesellschaft, 80333 München (DE)
(72) Erfinder: Pramschiefer, Kilian, 10247 Berlin (DE)

(57) **Zusammenfassung**

Die Erfindung betrifft einen Rotor (3) für eine rotierende Maschine (1), insbesondere eine elektrische rotierende Maschine (1a), der um eine Rotationsachse (4) rotierbar ist und zumindest eine tangential verlaufende Nut (9) aufweist, wobei die Nut (9) zumindest teilweise um die Rotationsachse (4) verläuft, wobei in der Nut (9) mindestens ein Wuchtgewicht (10) vorhanden ist. Um beim Auswuchten des Rotors einen, im Vergleich zu Stand der Technik, höheren Automatisierungsgrad zu erreichen, wird vorgeschlagen, dass dem Wuchtgewicht (10) Mittel zur Bewegung des Wuchtgewichts (10) in tangentiale Richtung (T) in der Nut (9) zugeordnet sind.

## Beschreibung

Die Erfindung betrifft einen Rotor für eine rotierende Maschine, insbesondere eine elektrische rotierende Maschine, der um eine Rotationsachse rotierbar ist und zumindest eine tangential verlaufende Nut aufweist, wobei die Nut zumindest teilweise um die Rotationsachse verläuft, wobei in der Nut mindestens ein Wuchtgewicht vorhanden ist.

Die Erfindung betrifft weiterhin eine rotierende Maschine mit einem derartigen Rotor.

Darüber hinaus betrifft die Erfindung ein Verfahren zum Wuchten eines derartigen Rotors.

Elektrische rotierende Maschinen, insbesondere Motoren und Generatoren, aber auch andere rotierende Maschinen wie Turbinen, insbesondere Gasturbinen und Dampfturbinen, weisen einen sich im Betrieb drehenden Rotor auf. Bei dem sich drehenden Rotor, der beispielsweise für Maschinen mit einer Leistung von mindestens einem Megawatt geeignet ist, treten signifikante Unwuchten auf, die störende Schwingungen verursachen. Daher wird ein Massenausgleich, der insbesondere durch Auswuchten erzielt wird, durchgeführt, um die störenden Schwingungen zu vermeiden und so beispielsweise die angestrebte Lebensdauer von Lagern zu gewährleisten.

Ein Rotor wird in der Regel ausgewuchtet, indem während einer Rotation eine Unwucht, beispielsweise mit Hilfe einer Schwingungsmessung, gemessen wird. Daraufhin werden bei einem Stillstand des Rotors Wuchtgewichte, beispielsweise an einer tangentialen Position, fest eingebaut. Nach dem Einbau der Wuchtgewichte lässt sich eine möglicherweise verbleibende Unwucht genauer messen und die Positionen der Wuchtgewichte werden optimiert. Durch einen derartigen iterativen Wuchtprozess müssen die fest eingebauten Wuchtgewichte versetzt werden. Das Ausgleichen stärkerer Unwuchten ist durch die hohe Anzahl an Iterationen zeitaufwändig und daher kostenaufwändig.

Die Offenlegungsschrift EP 2 924 853 A1 offenbart einen Rotor einer rotatorischen dynamoelektrischen Maschine, der zumindest an einer Stirnseite zumindest eine umlaufende und sich in ihrem Querschnitt nach außen verjüngende Nut aufweist. In die Nut werden ein oder mehrere Nuteinsätze fest eingesetzt, um eine Wuchtung des Rotors zu ermöglichen.

Die Offenlegungsschrift EP 1 927 785 A1 offenbart ein Wuchtsystem, das ein Wuchtgewicht aufweist, wobei das Wuchtsystem einem rotierenden Bauteil zugeordnet ist. Das Wuchtgewicht ist beweglich in Radialrichtung in einem radialen Wuchtspalt aufgenommen, so dass das rotierende Bauteil während seiner Rotation auswuchtbar ist.

Die Offenlegungsschrift DE 101 30 643 A1 offenbart eine Vorrichtung und Verfahren für ein Rotorauswuchtsystem, insbesondere für Rotoren, welche sich um eine feste Achse drehen. Zur Verminderung einer drehzahlabhängigen Unwucht des Rotors wird vorgeschlagen, in den Rotorkörper eine Auswuchtmasse zu integrieren, die separat von der Rotationsbewegung in radialer Richtung bewegbar ist und durch deren Bewegung das Trägheitsmoment des Rotors bezüglich der Rotationsachse veränderbar ist.

Der Erfindung liegt die Aufgabe zugrunde, einen Rotor der eingangs genannten Art anzugeben, der, im Vergleich zum Stand der Technik, mit einem höheren Automatisierungsgrad gewuchtet werden kann.

Diese Aufgabe wird durch einen Rotor für eine rotierende Maschine, insbesondere eine elektrische rotierende Maschine, gelöst, der um eine Rotationsachse rotierbar ist und zumindest eine tangential verlaufende Nut aufweist, wobei die Nut zumindest teilweise um die Rotationsachse herum verläuft, wobei in der Nut mindestens ein Wuchtgewicht vorhanden ist, wobei dem Wuchtgewicht Mittel zur Bewegung des Wuchtgewichts in tangentiale Richtung in der Nut zugeordnet sind.

Die Aufgabe wird darüber hinaus durch eine rotierende Maschine mit einem derartigen Rotor gelöst.

Darüber hinaus wird die Aufgabe durch ein Verfahren zum Wuchten eines derartigen Rotors gelöst, wobei das Wuchtgewicht zum Wuchten des Rotors innerhalb der Nut mit Hilfe der Mittel zur Bewegung des Wuchtgewichts in tangentiale Richtung bewegt wird.

Die in Bezug auf den Rotor nachstehend angeführten Vorteile und bevorzugten Ausgestaltungen lassen sich sinngemäß auf die rotierende Maschine und das Verfahren zum Wuchten des Rotors übertragen.

Bei der rotierenden Maschine handelt ist es sich insbesondere um einen Motor, ein einen Generator, eine Gasturbine und/oder eine Dampfturbine, welche für eine Leistung von mindestens einem Megawatt geeignet sind. Eine tangential verlaufende Nut oder eine in tangentiale Richtung verlaufende Nut ist eine Nut, welche in Umfangsrichtung verläuft. Insbesondere verläuft die tangentiale Nut an einer Stirnseite oder an einer Mantelfläche des Rotors. Eine derartige Nut erstreckt sich entlang des kompletten Umfangs oder nur entlang eines Teils des Umfangs. Die Mittel zur Bewegung des Wuchtgewichts können einzeln oder mehrteilig ausgeführt sein sowie mehrere Komponenten aufweisen, wobei die mehrere Komponenten verschiedene Funktionen haben können. Die Mittel zur Bewegung des Wuchtgewichts sind beispielsweise am Wuchtgewicht und/oder in der Nut angebracht.

Der Vorteil einer Verschiebung des Wuchtgewichts in Umfangsrichtung ist, dass Unwuchten an beliebigen Winkelpositionen des Rotors ausgeglichen werden können. Die Mittel zur Bewegung des Wuchtgewichts in tangentiale Richtung ermöglichen einen hohen Automatisierungsgrad, da ein Wuchten des Rotors während eines Betriebs des Rotors möglich ist. Insbesondere bei Verwendung entsprechender Sensorik ist ein automatisiertes Wuchten des Rotors möglich.

Bei einer bevorzugten Ausführungsform umfassen die Mittel zur Bewegung des Wuchtgewichts eine Kommunikationsvorrichtung, insbesondere zum Empfangen von Steuersignalen. Die Kommunikationsvorrichtung ist zum Senden und Empfangen von Signalen, insbesondere von Steuersignalen und/oder Sensorsignalen, geeignet. Insbesondere durch das Empfangen von Steuersignalen durch die Kommunikationsvorrichtung wird eine selbständige Bewegung des Wuchtgewichts innerhalb der Nut von außen koordiniert. Durch eine derartige Steuerung des Wuchtgewichts über ein Kommunikationssystem wird der Grad der Automatisierung beim Wuchten des Rotors erreicht.

Bevorzugt weist die Kommunikationsvorrichtung Mittel zur drahtlosen Kommunikation, insbesondere eine Antenne, auf. Die drahtlose Kommunikation findet insbesondere bei einer Trägerfrequenz im Kilohertzbereich bis zum Gigahertzbereich statt. Die Mittel zur drahtlosen Kommunikation ermöglichen eine insbesondere bidirektionale Übertragung von Daten. Durch eine drahtlose Kommunikation werden die Daten kontaktlos übertragen, was die Präzision des Wuchtvorgangs erhöht und die Ansteuerung des Wuchtgewichts vereinfacht.

Vorzugsweise umfassen die Mittel zur Bewegung des Wuchtgewichts eine Rollvorrichtung. Die Rollvorrichtung ist insbesondere als mindestens ein Rad oder mindestens eine Walze ausgeführt. Durch eine derartige Rollvorrichtung wird das Wuchtgewicht reibungsarm in der Nut bewegt.

Bei einer weiteren vorteilhaften Ausgestaltung umfassen die Mittel zur Bewegung des Wuchtgewichts eine Antriebsvorrichtung. Die Antriebsvorrichtung ist insbesondere als ein, beispielsweise elektrischer, Motor ausgeführt. Durch eine Antriebsvorrichtung kann das Wuchtgewicht ohne äußere mechanische Einwirkung in der Nut bewegt werden.

Zweckdienlicherweise umfassen die Mittel zur Bewegung des Wuchtgewichts eine Energiespeichervorrichtung. Die Energiespeichervorrichtung ist insbesondere als eine Batterie oder als ein Akkumulator (kurz Akku), beispielsweise als Lithium-Ionen Akku, ausgeführt. Beispielsweise wird der Akku drahtlos über ein elektromagnetisches Feld geladen. Durch eine derartige Energiespeichervorrichtung entfallen beispielsweise zusätzliche Kabel und Stecker zum Anschließen einer Spannungsversorgung an den sich im Betrieb drehenden Rotor. Ferner kann das Wuchtgewicht während des Betriebes des Rotors ohne zusätzliche Energieübertragung bewegt werden.

Bei einer bevorzugten Ausführungsform weisen die Mittel zur Bewegung des Wuchtgewichts eine Arretierungsvorrichtung auf. Beispielsweise wird eine Arretierung durch ein Steuersignal aktiviert und/oder gelöst. Durch die Arretierungsvorrichtung wird das Wuchtgewicht insbesondere beim Erreichen einer für den Wuchtzustand günstigen Position, in der Nut fixiert, sodass es sich beim Betrieb des Rotors nicht weiter bewegen kann.

Bevorzugt umfasst die Arretierungsvorrichtung zumindest ein in Radialrichtung wirkendes elastisches Element. Das elastische Element ist insbesondere eine Feder, welche einen Anpressdruck erzeugt, sodass eine reibschlüssige Verbindung zwischen dem Wuchtgewicht und einer Nutwand entsteht.

Vorzugsweise sind zumindest Teile der Mittel zur Bewegung des Wuchtgewichts Bestandteile des Wuchtgewichts. Insbesondere sind zumindest Teile der Arretierungsvorrichtung, der Antriebsvorrichtung, der Energiespeichervorrichtung und/oder der Rollvorrichtung Bestandteile des Wuchtgewichts. Dadurch muss die Nut nicht oder nur sehr wenig modifiziert werden, um eine zur Bewegung des Wuchtgewichts zu ermöglichen. Dies ist vorteilhaft, da defekte Teile leicht ausgetauscht und die Mittel zur Bewegung des Wuchtgewichts nachgerüstet werden können.

Bei einer weiteren vorteilhaften Ausgestaltung ist eine Sensorvorrichtung zur Bestimmung der, insbesondere tangentialen, Position des Wuchtgewichts innerhalb der Nut vorgesehen. Der Sensor ist insbesondere als Inkrementalgeber ausgeführt, welcher die Winkelposition in der Nut, beispielsweise durch Schleifkontakte, ermittelt. Dies ist vorteilhaft, eine sensorbasierte Bestimmung der tangentialen Position des Wuchtgewichts ein automatisiertes Wuchten des Rotors erleichtert wird.

Vorteilhaft verläuft die Nut konzentrisch um die Rotationsachse und ist ringförmig ausgebildet. Eine Radialkraft des Wuchtgewichts ist bei einer konzentrischen und ringförmig ausgebildeten Nut in jeder Winkelposition gleich groß. Daher vereinfacht eine konzentrische und ringförmig ausgebildete Nut ein automatisiertes Wuchten des Rotors.

Bei einer bevorzugten Ausführungsform weist die Nut eine Öffnung auf. Durch eine derartige Öffnung kann das Wuchtgewicht eingesetzt und entnommen werden.

Bevorzugt ist die Öffnung der Nut zumindest teilweise umlaufend ausgebildet. Eine zumindest teilweise umlaufende Nut, welche insbesondere rotationssymmetrisch ausgeführt ist, hat einen geringen Einfluss auf den Wuchtzustand des Rotors. Weiterhin kann das Wuchtgewicht in seiner Position überprüft werden.

Zweckdienlicherweise verjüngt sich der Nutquerschnitt zur Öffnung hin. Ein sich verjüngender Nutquerschnitt stabilisiert das Wuchtgewicht in der Nut durch einen Formschluss insbesondere bei eventuell auftretenden Fliehkräften.

Vorzugsweise ist die Öffnung an einer Stirnseite des Rotors angeordnet. Die Stirnseiten sind insbesondere kreisförmige Flächen an den axialen Enden des insbesondere kreiszylinderförmigen Rotors. Dies ist vorteilhaft, da das Wuchtgewicht gegen bei einer Drehung des Rotors auftretende Fliehkräfte durch eine formschlüssige Verbindung mit einer Nutwand fixiert ist.

Bei einer bevorzugten Ausführungsform wird vor dem Wuchten des Rotors ein Wuchtzustand des Rotors ermittelt. Eine derartige Messung des Wuchtzustands ist zuverlässiger und genauer als beispielsweise eine Simulation.

Zweckdienlicherweise wird der Wuchtzustand des Rotors mit einer Schwingungsmessung ermittelt. Erfahrungsgemäß hat sich eine derartige Messung des Wuchtzustands als besonders vorteilhaft erwiesen.

Im Folgenden wird die Erfindung anhand der in den Figuren dargestellten Ausführungsbeispiele näher beschrieben und erläutert.

Es zeigen:
- FIG 1: einen Querschnitt einer rotierenden Maschine, welche als eine elektrische rotierende Maschine ausgeführt ist,
- FIG 2: eine perspektivische Darstellung eines Rotors mit in einer tangentialen Nut angeordneten mobilen Wuchtgewichten,
- FIG 3: einen Querschnitt eines Rotors 3 mit mobilen Wuchtgewichten, die in einer tangentialen Nut angeordnet sind,
- FIG 4: einen schematischen Längsschnitt einer ersten Ausführungsform eines mobilen Wuchtgewichts,
- FIG 5: einen schematischen Querschnitt einer ersten Ausführungsform eines mobilen Wuchtgewichts,
- FIG 6: einen schematischen Längsschnitt einer zweiten Ausführungsform eines mobilen Wuchtgewichts,
- FIG 7: einen Querschnitt eines Rotors mit in einer tangentialen Nut angeordneten mobilen Wuchtgewichten und mit einer Sensorvorrichtung,
- FIG 8: einen Querschnitt eines Rotors mit mobilen Wuchtgewichten, die in zwei tangentialen Nuten angeordnet sind,
- FIG 9: einen Querschnitt eines Rotors mit mobilen Wuchtgewichten, die in einer tangentialen Nut mit zwei Öffnungen angeordneten sind,
- FIG 10: einen vergrößerten Längsschnitt eines Rotors mit mobilen Wuchtgewichten in einer tangentialen Nut mit einer axialen Öffnung an einer Stirnseite,
- FIG 11: einen vergrößerten Längsschnitt eines Rotors mit mobilen Wuchtgewichten in einer tangentialen Nut mit einer radialen Öffnung,
- FIG 12: einen vergrößerten Querschnitt einer ersten Ausführungsform einer Nut,
- FIG 13: einen vergrößerten Querschnitt einer zweiten Ausführungsform einer Nut,
- FIG 14: einen vergrößerten Querschnitt einer dritten Ausführungsform einer Nut und
- FIG 15: eine Seitenansicht einer rotierenden Maschine, welche als eine Turbine ausgeführt ist.

Gleiche Bezugszeichen haben in den verschiedenen Figuren die gleiche Bedeutung.

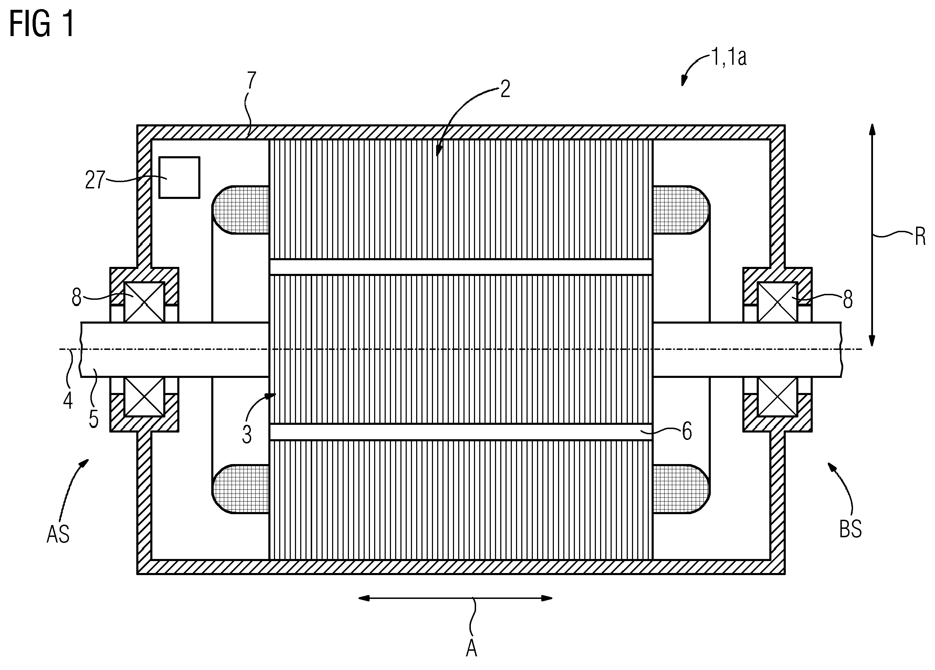

FIG 1 zeigt einen Querschnitt einer elektrischen rotierenden Maschine 1a.

FIG 1 zeigt einen Querschnitt einer rotierenden Maschine 1, welche als eine elektrische rotierende Maschine 1a ausgeführt ist. Die elektrische rotierende Maschine 1a weist einen um eine Rotationsachse 4 rotierenden Rotor 3 und einen den Rotor 3 umgebenden Stator 2 auf, wobei der Rotor 3 vom Stator 2 durch einen Luftspalt 6 getrennt ist. Die Rotationsachse 4 des Rotors 3 definiert eine axiale Richtung A, eine radiale Richtung R und eine tangentiale Richtung T. Der Rotor 3 und der Stator 2 sind geblecht ausgeführt. Die elektrischen rotierenden Maschine 1a ist in einem Gehäuse 19 angeordnet, das an einer Antriebsseite AS und an einer Nicht-Antriebsseite BS jeweils ein Lager 8 hält. Der Rotor 3 umfasst darüber hinaus eine Welle 5, welche auf den Lagern 8 aufliegt.

Der Rotor 3 weist häufig eine Unwucht auf, die durch eine unsymmetrische Massenverteilung des Rotors 3 entsteht. Durch eine derartige Unwucht treten bei dem sich drehenden Rotor 3, insbesondere bei einer Leistung von mindestens einem Megawatt, störende Schwingungen auf. Die elektrische rotierende Maschine 1a weist daher einen Schwingungssensor 27 auf, um die von einer Unwucht des Rotors 3 verursachten Schwingungen zu messen. Um Belastung der Lager 8 aufgrund einer derartigen Unwucht zu vermeiden oder zumindest zu reduzieren, wird der Rotor 3 ausgewuchtet.

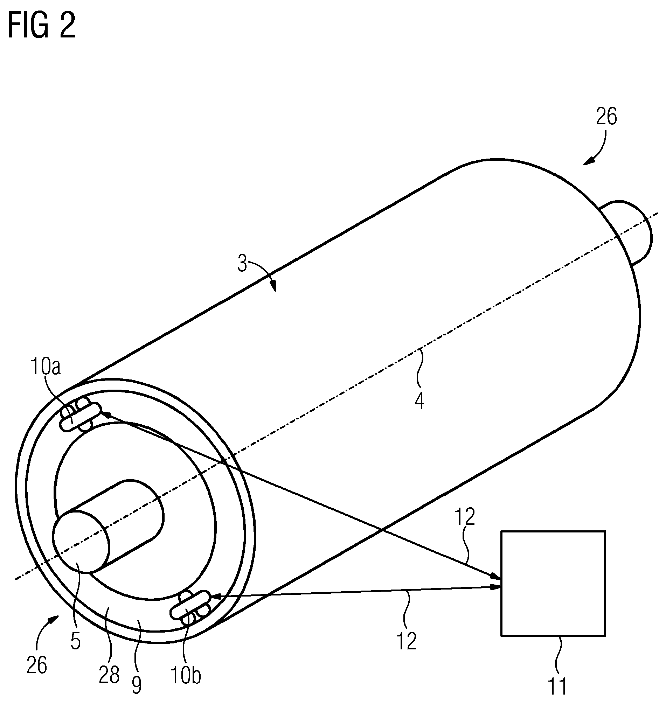

FIG 2 zeigt eine perspektivische Darstellung eines Rotors 3 mit in einer tangentialen Nut 9 angeordneten mobilen Wuchtgewichten 10a, 10b. Die tangentiale Nut befindet sich an einer Stirnseite 26 des Rotors 3 und weist eine Öffnung 28 in axiale Richtung A auf. Die exemplarisch zwei Wuchtgewichte 10a, 10b stehen in einer bevorzugt bidirektionalen Kommunikationsverbindung 12 mit einer Steuervorrichtung 11. Mit Hilfe der bidirektionalen Kommunikationsverbindung 12 kann die Steuervorrichtung 11 Steuersignale an die Wuchtgewichte 10, 10b senden und die Wuchtgewichte 10a, 10b können beispielsweise Sensordaten an die Steuervorrichtung 11 in die Gegenrichtung senden. Die Kommunikationsverbindung 12 zwischen der Steuervorrichtung 11 und dem ersten Wuchtgewicht 10a ist unabhängig von der Kommunikationsverbindung 12 zwischen der Steuervorrichtung 11 und dem zweiten Wuchtgewicht 10b. Kommunizieren zwei oder mehrere Wuchtgewichte 10a, 10b mit der Steuervorrichtung 11 kommen ein Zeitmultiplex-Verfahren, ein Frequenzmultiplex-Verfahren und/oder ein Codemultiplex-Verfahren zum Einsatz. Die Kommunikation zwischen der Steuervorrichtung 11 und den Wuchtgewichten 10a, 10b kann elektrisch oder optisch erfolgen. Sowohl die elektrische als auch die optische Kommunikation können drahtlos oder drahtgebunden, beispielsweise über Kabel oder Lichtleiter, stattfinden. Die weitere Ausführung des Rotors 3 entspricht der aus FIG 1.

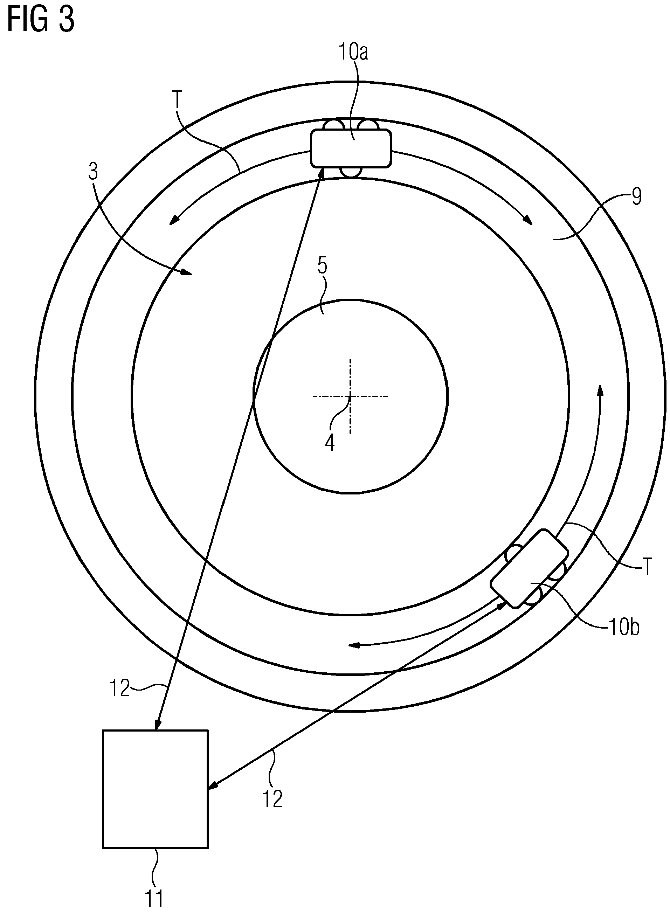

FIG 3 zeigt einen Querschnitt eines Rotors 3 mit mobilen Wuchtgewichten 10a, 10b, die in einer tangentialen Nut 9 angeordnet sind. Die Nut 9 weist, wie in FIG 2, eine Öffnung 28 an einer Stirnseite 26 des Rotors 3 auf. Innerhalb der Nut 9 sind die exemplarisch zwei Wuchtgewichte 10a, 10b abhängig vom Wuchtzustand des Rotors 3 angeordnet. Mit Hilfe der Steuervorrichtung 11 lassen sich die Wuchtgewichte 10a, 10b über eine Kommunikationsverbindung 12 unabhängig voneinander in tangentiale Richtung T innerhalb der Nut bewegen. Die weitere Ausführung des Rotors 3 entspricht der aus FIG 2.

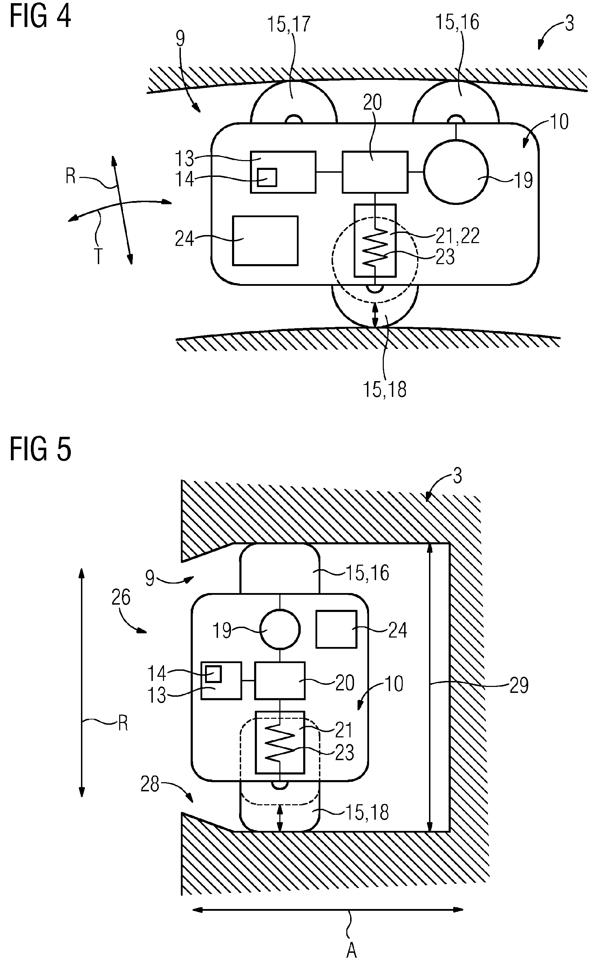

FIG 4 zeigt einen schematischen Längsschnitt einer ersten Ausführungsform eines mobilen Wuchtgewichts 10. Das Wuchtgewicht 10 weist eine Wuchtmasse 24 und Mittel zur Bewegung des Wuchtgewichts 10 in tangentiale Richtung T in der Nut 9 auf. Die Mittel zur Bewegung des Wuchtgewichts 10 umfassen eine Kommunikationsvorrichtung 13, eine Rollvorrichtung 15, eine Antriebsvorrichtung 19, eine Energiespeichervorrichtung 20 und eine Arretierungsvorrichtung 21. Mit Hilfe der Kommunikationsvorrichtung 13 wird eine, insbesondere drahtlose und bidirektionale, Kommunikationsverbindung 12 zu einer Steuervorrichtung 11 hergestellt. Die drahtlosen Signale werden von einer Antenne 14 gesendet und empfangen. Auch die Energiespeichervorrichtung 20 kann drahtlos durch diese oder eine weitere Antenne 24 geladen werden. Die Energiespeichervorrichtung 20 stellt die elektrische Energie für die Antriebsvorrichtung 19, die Kommunikationsvorrichtung 13 und die Arretierungsvorrichtung 21 zur Verfügung und ist mit diesen elektrisch leitend verbunden. Die Antriebsvorrichtung 19 ist als ein elektrischer Motor ausgeführt durch den das Wuchtgewicht 10 ohne äußere mechanische Einwirkung in der Nut 9 bewegt wird. Mit Hilfe der Rollvorrichtung 15 wird das Wuchtgewicht 10 so durch die Nut 9 bewegt. Insbesondere ist die Rollvorrichtung 15 als Rad oder Walze ausgeführt. Das Wuchtgewicht 10 weist exemplarisch drei Räder auf, wobei zwei Räder an der radial äußeren Seite der Nut 9 am Rotor 3 aufliegen und ein Rad an der radial inneren Seite der Nut 9 am Rotor 3 aufliegt. An der radial äußeren Seite der Nut 9 befinden sich exemplarisch ein Rollrad 17 und ein Antriebsrad 16, wobei das Antriebsrad 16 mit der Antriebsvorrichtung 19 verbunden ist und von dieser angetrieben wird. An der radial inneren Seite der Nut 9 befindet sich exemplarisch ein Stützrad 18, welches mit der Arretierungsvorrichtung 21 verbunden ist und von der Arretierungsvorrichtung 21 gegen die radial innere Seite der Nut 9 gedrückt wird. Es können auch zwei oder mehrere Rollvorrichtungen 15 durch die Arretierungsvorrichtung 21 in radiale Richtung R gegen die Wandung der Nut 9, nach radial innen und/oder außen, gedrückt werden. Ein für eine Arretierung benötigter Anpressdruck in radiale Richtung R wird von einem elastischen Element 23, insbesondere einer Feder, erzeugt. Für die Arretierung des Wuchtgewichts 10 in der Nut 9 werden durch die Arretierungsvorrichtung 21 zumindest Teile der Rollvorrichtung 15 blockiert, sodass eine reibschlüssige und kraftschlüssige Verbindung zwischen der Rollvorrichtung 15 und der Nut 9 entsteht. Weiterhin ist das mobile Wuchtgewicht 10 durch die Federkraft innerhalb der Nut 9 an die dortige Höhe anpassbar, so dass ein Kontakt zwischen der Rollvorrichtung 15 und der Nutwand gewährleistet ist.

FIG 5 zeigt einen schematischen Querschnitt einer ersten Ausführungsform eines mobilen Wuchtgewichts 10. Das Wuchtgewicht 10 befindet sich in einer an Nut 9, welche eine Öffnung 28 an einer Stirnseite 26 des Rotors 3 aufweist, wobei sich ein Nutquerschnitt 29 zur stirnseitigen Öffnung 28 hin verjüngt. Durch die Verjüngung des Nutquerschnitts 29 wird das Wuchtgewicht 10 zusätzlich zur Fixierung durch die Arretierungsvorrichtung 21 in axiale Richtung A gesichert. Die weitere Ausführung des Wuchtgewichts 10 entspricht der aus FIG 4.

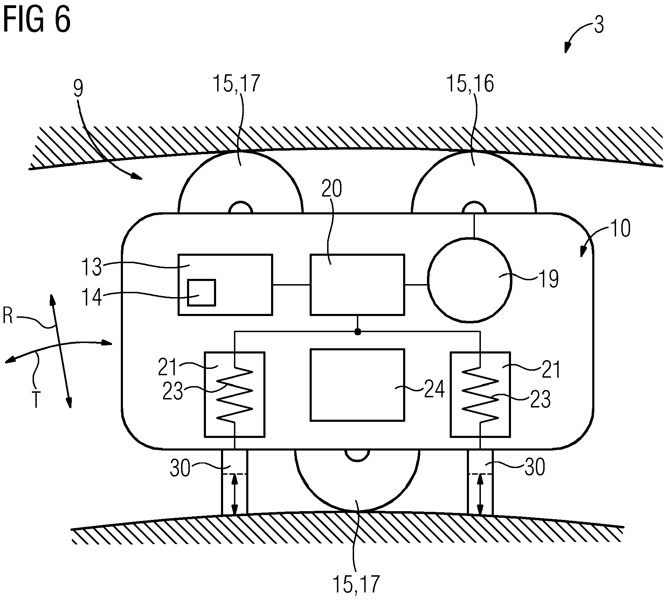

FIG 6 zeigt einen schematischen Längsschnitt einer zweiten Ausführungsform eines mobilen Wuchtgewichts 10. Die Arretierungsvorrichtung 21 weist exemplarisch zwei dedizierte Stempel 30 auf, welche durch eine Feder in radiale Richtung R gedrückt werden und so durch den erzeugten Anpressdruck in radiale Richtung R das Wuchtgewicht in der Nut 9 arretieren. Alternativ zur Feder ist eine Spindel mit einem Gewinde, die durch eine Drehung den Stempel 30 in radiale Richtung R drückt und das Wuchtgewicht 10 in der Nut 9 dadurch fixiert ebenfalls Gegenstand der Erfindung. Die weitere Ausführung des Wuchtgewichts 10 entspricht der aus FIG 4 und FIG 5.

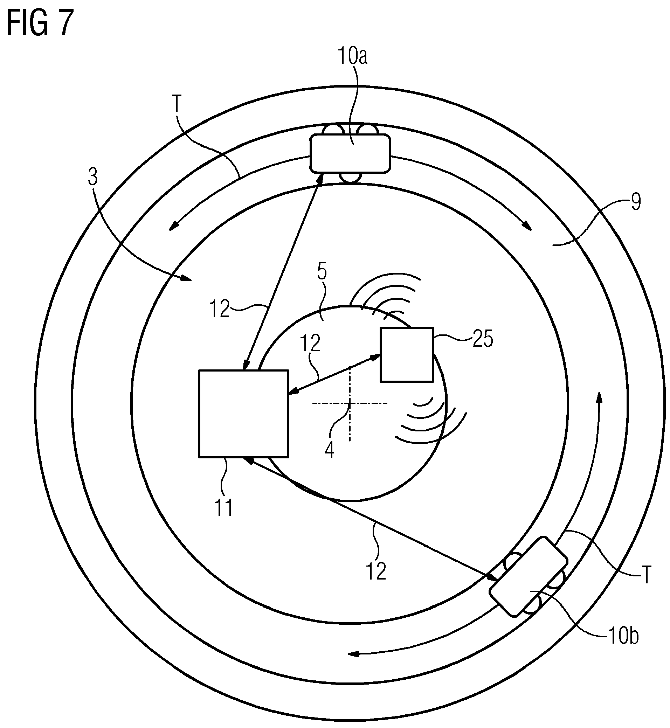

FIG 7 zeigt einen Querschnitt eines Rotors 3 mit in einer tangentialen Nut 9 angeordneten mobilen Wuchtgewichten 10a, 10b und mit einer Sensorvorrichtung 25. Die Sensorvorrichtung 25 ist mit der Steuervorrichtung 11 über eine exemplarisch drahtgebundene Kommunikationsverbindung 12 kontaktiert und ermittelt die Winkelposition des ersten Wuchtgewichts 10a und des zweiten Wuchtgewichts 10b. Die Sensorvorrichtung 25 befindet sich am Rotor 3, kann sich aber auch innerhalb des Rotors 3 oder außerhalb des Rotors 3 befinden. Die Ermittlung der winkelabhängigen Position der Wuchtgewichte 10a, 10b kann über eine Laufzeitmessung von radarbasiert, ultraschallbasiert oder auf einem anderen Weg erfolgen. Die weitere Ausführung des Rotors 3 entspricht der aus FIG 3.

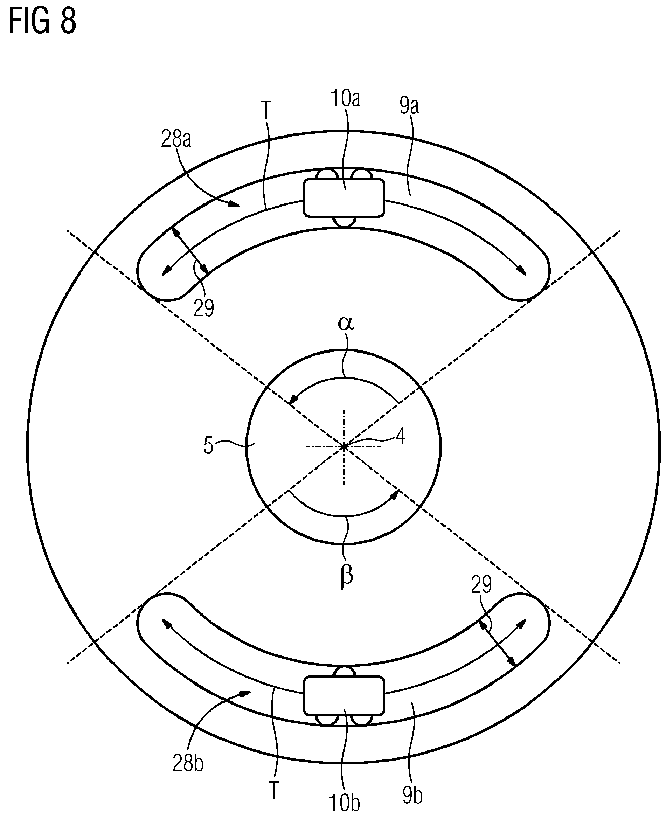

FIG 8 zeigt einen Querschnitt eines Rotors 3 mit mobilen Wuchtgewichten 10a, 10b, die in zwei tangentialen Nuten 9a, 9b angeordnet sind. Die erste Nut 9a ist als ein konzentrisch um die Rotationsachse 4 verlaufender Kreisbogen mit einem ersten Mittelpunktswinkel α ausgebildet und weist eine erste Öffnung 28a an einer Stirnseite 26 des Rotors 3 auf. Die zweite Nut 9a ist ebenfalls als ein konzentrisch um die Rotationsachse 4 verlaufender Kreisbogen mit einem zweiten Mittelpunktswinkel β ausgebildet und weist eine zweite Öffnung 28b an der Stirnseite 26 des Rotors 3 auf. Die Nuten 9a, 9b weisen denselben Nutquerschnitt 29 auf. In FIG 8 sind die Mittelpunktswinkel α, β gleich groß und die zwei tangentialen Nuten 9a, 9b sind punktsymmetrisch zur Rotationsachse angeordnet. In der ersten Nut 9a und in der zweiten Nut 9b befinden sich jeweils exemplarisch ein Wuchtgewicht 10a, 10b. Das erste Wuchtgewicht 10a wird über den ersten Mittelpunktswinkel α in der ersten Nut 9a bewegt, während das zweite Wuchtgewicht 10b über den zweiten Mittelpunktswinkel β in der zweiten Nut 9b bewegt wird. Durch Veränderung der tangentialen Position der Wuchtgewichte 10a, 10b wird der Wuchtzustand des Rotors 3 angepasst. Weitere Ausgestaltungen der Nuten 9a, 9b sind ebenfalls Gegenstand der Erfindung. Die weitere Ausführung des Rotors 3 entspricht der aus FIG 3.

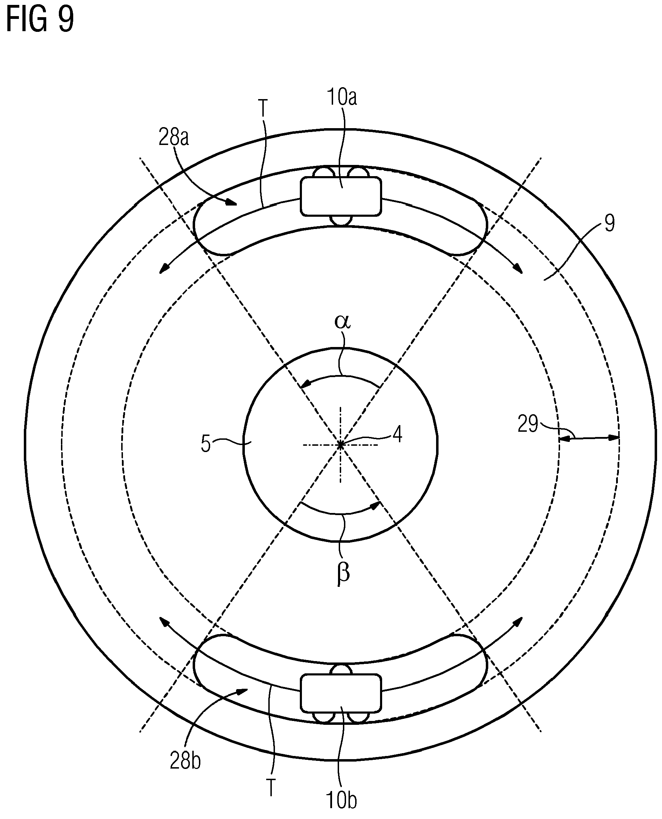

FIG 9 zeigt einen Querschnitt eines Rotors 3 mit mobilen Wuchtgewichten 10a, 10b, die in einer tangentialen Nut 9 mit zwei Öffnungen 28a, 28b angeordneten sind. Die beiden Öffnungen 28a, 28b befinden sich an einer Stirnseite 26 des Rotors. Die Nut 9 ist ringförmig umlaufend konzentrisch um die Rotationsachse 4 ausgebildet. Die erste Öffnung der Nut 9 ist als Kreisbogen mit einem ersten Mittelpunktswinkel α ausgebildet und die zweite Öffnung 28b der Nut 9 ist als Kreisbogen mit einem zweiten Mittelpunktswinkel β ausgebildet. Die weitere Ausführung des Rotors 3 entspricht der aus FIG 8.

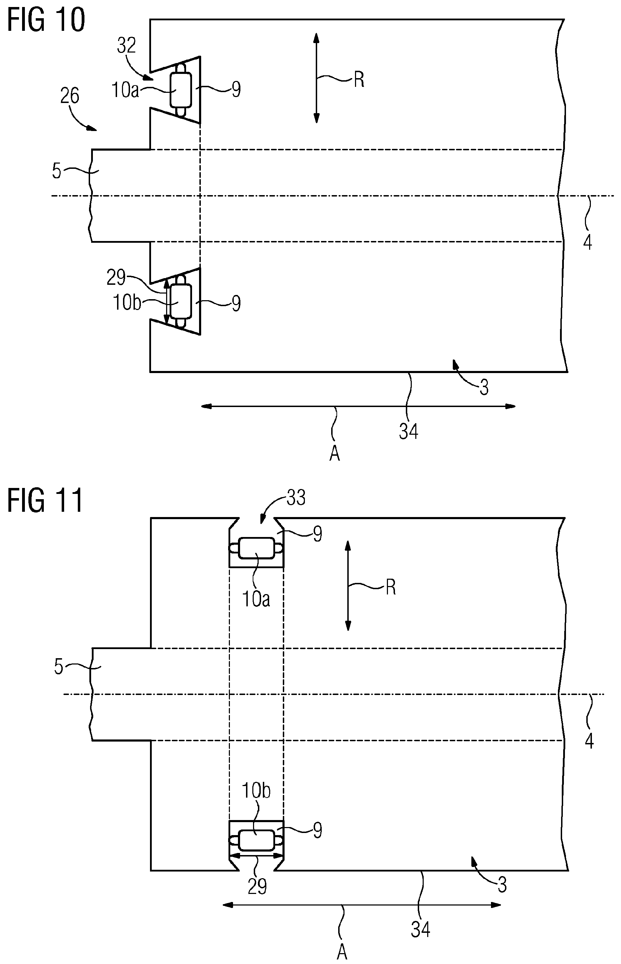

FIG 10 zeigt einen vergrößerten Längsschnitt eines Rotors 3 mit mobilen Wuchtgewichten 10a, 10b in einer tangentialen Nut 9 mit einer axialen Öffnung 32 an einer Stirnseite 16. Die Arretierung der Wuchtgewichten 10a, 10b erfolgt in radiale Richtung R. Durch eine Verjüngung des Nutquerschnitts 29 zur Öffnung 28 wird verhindert, dass die Wuchtgewichte 10a, 10b im Betrieb aus der Nut 9 fallen. Die weitere Ausführung des Rotors 3 entspricht der aus FIG 3.

FIG 11 zeigt einen vergrößerten Längsschnitt eines Rotors mit mobilen Wuchtgewichten 10a, 10b in einer tangentialen Nut 9 mit einer radialen Öffnung 33. Die radiale Öffnung 33 befindet sich auf der Mantelfläche 34 des Rotors 3. Die Arretierung der Wuchtgewichten 10a, 10b erfolgt in axiale Richtung A. Durch eine Verjüngung des Nutquerschnitts 29 zur Öffnung 28 wird verhindert, dass die Wuchtgewichte 10a, 10b im Betrieb durch in radiale Richtung R wirkende Fliehkräfte aus der Nut 9 geschleudert werden. Die weitere Ausführung des Rotors 3 entspricht der aus FIG 3.

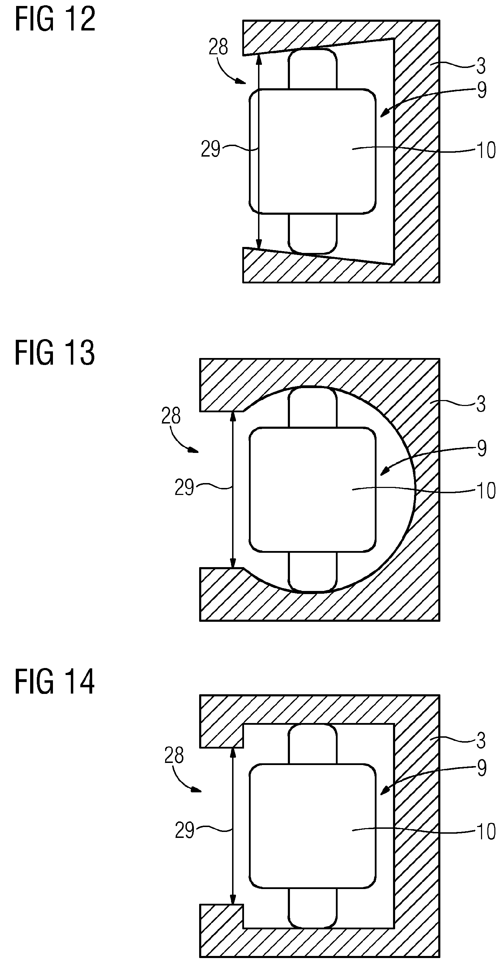

FIG 12 zeigt einen vergrößerten Querschnitt einer ersten Ausführungsform einer Nut 9. In der Nut 9 befindet sich ein mobiles Wuchtgewicht 10. Der Nutquerschnitt 29 verjüngt sich in axiale Richtung A hin zur Öffnung 28 linear. Durch die Verjüngung des Nutquerschnitts 29 wird verhindert, dass das Wuchtgewicht 10 während des Betriebes des Rotors 3 aus der Nut 9 fällt.

FIG 13 zeigt einen vergrößerten Querschnitt einer zweiten Ausführungsform einer Nut 9, welche teilweise kreisförmig ausgeführt ist und eine gerade Öffnung 28 aufweist. Der Nutquerschnitt 29 ist an der Stelle maximal, an der sich das mobile Wuchtgewicht 10 befindet.

FIG 14 zeigt einen vergrößerten Querschnitt einer dritten Ausführungsform einer Nut 9, welche wie die Nut 9 in FIG 13 eine gerade Öffnung 28 aufweist. Der Nutquerschnitt 29 verjüngt sich in axiale Richtung A hin zur Öffnung 28 durch eine Treppe, um ein Herausfallen des Wuchtgewichts 10 zu vermeiden.

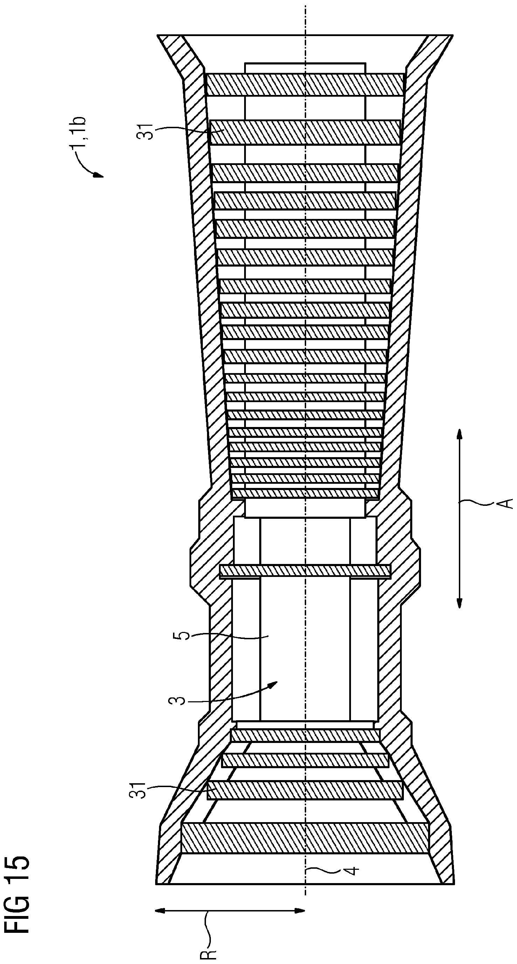

FIG 15 zeigt eine Seitenansicht einer Turbine 1b. Die Turbine 1b ist exemplarisch als Dampfturbine ausgeführt, welche zusammen mit einem Generator in einem Kraftwerk eingesetzt wird. Eine Gasturbine ist ebenfalls Gegenstand der Erfindung. Die Turbine 1b weist einen Rotor 3 mit einer Welle 5 auf, der um eine Rotationsachse 4 drehbar ist. Der Rotor 3 weist eine Vielzahl von Schaufeln 31 auf. Um eine möglichst hohe Energieeffizienz zu erzielen, wird der Rotor 3 der Turbine 1b ausgewuchtet.

## Patentansprüche

1. Rotor (3) für eine rotierende Maschine (1), insbesondere eine elektrische rotierende Maschine (1a), der um eine Rotationsachse (4) rotierbar ist und zumindest eine tangential verlaufende Nut (9) aufweist,
wobei die Nut (9) zumindest teilweise um die Rotationsachse (4) herum verläuft,
wobei in der Nut (9) mindestens ein Wuchtgewicht (10) vorhanden ist,
**dadurch gekennzeichnet, dass** dem Wuchtgewicht (10) Mittel zur Bewegung des Wuchtgewichts (10) in tangentiale Richtung (T) in der Nut (9) zugeordnet sind.

2. Rotor (3) nach Anspruch 1,
wobei die Mittel zur Bewegung des Wuchtgewichts (10) eine Kommunikationsvorrichtung (13), insbesondere zum Empfangen von Steuersignalen, umfassen.

3. Rotor (3) nach Anspruch 2,
wobei die Kommunikationsvorrichtung (13) Mittel zur drahtlosen Kommunikation, insbesondere eine Antenne (14), aufweist.

4. Rotor (3) nach einem der vorherigen Ansprüche,
wobei die Mittel zur Bewegung des Wuchtgewichts (10) eine Rollvorrichtung (15) umfassen.

5. Rotor (3) nach einem der vorherigen Ansprüche,
wobei die Mittel zur Bewegung des Wuchtgewichts (10) eine Antriebsvorrichtung (19) umfassen.

6. Rotor (3) nach einem der vorherigen Ansprüche,
wobei die Mittel zur Bewegung des Wuchtgewichts (10) eine Energiespeichervorrichtung (20) umfassen.

7. Rotor (3) nach einem der vorherigen Ansprüche,
wobei die Mittel zur Bewegung des Wuchtgewichts (10) eine Arretierungsvorrichtung (21) aufweisen.

8. Rotor (3) nach Anspruch 7,
wobei die Arretierungsvorrichtung (21) zumindest ein in Radialrichtung (R) wirkendes elastisches Element (23) umfasst.

9. Rotor (3) nach einem der vorherigen Ansprüche,
wobei zumindest Teile der Mittel zur Bewegung des Wuchtgewichts (10) Bestandteile des Wuchtgewichts (10) sind.

10. Rotor (3) nach einem der vorherigen Ansprüche,
wobei eine Sensorvorrichtung (25) zur Bestimmung der, insbesondere tangentialen, Position des Wuchtgewichts (10) innerhalb der Nut (9) vorgesehen ist.

11. Rotor (3) nach einem der vorherigen Ansprüche,
wobei die Nut (9) konzentrisch um die Rotationsachse (4) verläuft und ringförmig ausgebildet ist.

12. Rotor (3) nach einem der vorherigen Ansprüche,
wobei die Nut (9) eine Öffnung (28) aufweist.

13. Rotor (3) nach Anspruch 12,
wobei die Öffnung (28) der Nut (9) zumindest teilweise umlaufend ausgebildet ist.

14. Rotor (3) nach einem der Ansprüche 12 bis 13,
wobei sich der Nutquerschnitt (29) zur Öffnung (28) hin verjüngt.

15. Rotor (3) nach einem der Ansprüche 12 bis 14,
wobei die Öffnung (28) an einer Stirnseite (26) des Rotors (3) angeordnet ist.

16. Rotierende Maschine (1) mit einem Rotor (3) nach einem der Ansprüche 1 bis 15.

17. Rotierende Maschine (1) nach Anspruch 16,
wobei die rotierende Maschine (1) als eine elektrische rotierende Maschine (1a) ausgeführt ist.

18. Rotierende Maschine (1) nach Anspruch 16,
wobei die rotierende Maschine (1) als eine Turbine (1b) ausgeführt ist.

19. Rotierende Maschine (1) nach einem der Ansprüche 16 bis 18,
wobei die rotierende Maschine (1) eine Steuervorrichtung (11) zur Steuerung der Bewegung des Wuchtgewichts (10) aufweist.

20. Verfahren zum Wuchten eines Rotors (3) nach einem der Ansprüche 1 bis 15,
wobei das Wuchtgewicht (10) zum Wuchten des Rotors (3) innerhalb der Nut (9) mit Hilfe der Mittel zur Bewegung des Wuchtgewichts (10) in tangentiale Richtung (T) bewegt wird.

21. Verfahren nach Anspruch 20,
wobei das Wuchtgewicht (10) während eines Betriebes des Rotors (3) in tangentiale Richtung (T) bewegt wird.

22. Verfahren nach einem der Ansprüche 20 oder 21,
wobei ein Steuersignal an die Kommunikationsvorrichtung (13) übertragen wird.

23. Verfahren nach einem der Ansprüche 20 bis 22,
wobei nach dem Wuchten des Rotors (3) eine Arretierung des Wuchtgewichts (10) in der tangentialen Nut (9) durchgeführt wird.

24. Verfahren nach einem der Ansprüche 20 bis 23,
wobei vor dem Wuchten des Rotors (3) ein Wuchtzustand des Rotors (3) ermittelt wird.

25. Verfahren nach Anspruch 24,
wobei der Wuchtzustand des Rotors (3) mit einer Schwingungsmessung ermittelt wird.
